# EUROPÄISCHE PATENTSCHRIFT

(11) **EP 2 126 511 B1**
(45) Veröffentlichungstag und Bekanntmachung des Hinweises auf die Patenterteilung: **31.12.2014**
(21) Anmeldenummer: 08707761.6
(22) Anmeldetag: 19.02.2008
(51) Int. Cl.: G01B 11/16, G01L 1/24, G02B 6/02

(54) **OPTISCHER DEHNUNGSMESSSTREIFEN**
OPTICAL STRAIN GAUGE
JAUGE OPTIQUE D'ALLONGEMENT

(30) Priorität: 19.02.2007 DE 102007008464
(43) Veröffentlichungstag der Anmeldung: 02.12.2009
(73) Patentinhaber: Hottinger Baldwin Messtechnik GmbH, 64293 Darmstadt (DE)
(72) Erfinder: KREUZER, Manfred, 64331 Weiterstadt (DE); KIPP, Tobias, 63322 Rödermark (DE); KLECKERS, Thomas, 64347 Griesheim (DE)
(74) Vertreter: Staudte, Ralph
(86) Internationale Anmeldenummer: PCT/EP2008/001258
(87) Internationale Veröffentlichungsnummer: WO 2008/101657

(56) Entgegenhaltungen:
- EP-A- 1 124 112
- EP-A- 1 148 324
- WO-A-02/46712
- WO-A-2004/029570
- GB-A- 2 421 075
- JP-A- 2003 279 760
- JP-A- 2005 134 199
- US-B1- 6 519 388

## Beschreibung

Die Erfindung betrifft einen optischen Dehnungsmessstreifen gemäß dem Oberbegriff des Patentanspruchs 1, sowie ein Verfahren zu dessen Herstellung gemäß dem Oberbegriff des Patentanspruchs 9.

Optische Dehnungsmessstreifen sind in verschiedenster Form bekannt und bestehen meist aus einer folienartigen Trägerschicht oder sind in einer derartigen Trägerschicht eingegossen. Diese Trägerschichten besitzen eine Unterlage, auf der ein Lichtwellenleiter befestigt ist, der einen Abschnitt mit einem Faser-Bragg-Gitter enthält. Durch ein derartiges Faser-Bragg-Gitter wird ein in den Lichtwellenleiter eingespeister kohärenter Lichtstrahl mit einer bestimmten Wellenlänge reflektiert und kann als Reflexionspeak detektiert werden. Wird ein derartiger optischer Dehnungsmessstreifen auf einem Verformungskörper appliziert, so verändert sich durch eine Dehnung die Wellenlänge des Reflexionspeaks proportional der Dehnung. Derartige optische Dehnungsmessstreifen sind deshalb ähnlich verwendbar wie elektrische Dehnungsmessstreifen mit einem Widerstandsgitter und können zur Erfassung verschiedenster physikalischer Größen genutzt werden.

In der Praxis ist aufgefallen, dass derartige Reflexionspeaks durch mechanische Spannungen orthogonal zur Faserrichtung oder durch quergerichtete Dehnungsfelder mehrere Reflexionsmaxima oder ein in der Breite erheblich vergrößertes Maximum aufweisen, das in gängigen Auswertegeräten nicht genau mit einer eindeutigen Wellenlänge auflösbar ist.

Ein derartiger optischer Dehnungsmessstreifen zur Messung mechanischer Spannungen ist aus der EP 1 129 327 B1 bekannt. Dabei handelt es sich um einen optischen Dehnungsmessstreifen, der als faseroptische Rosette ausgebildet ist. Der optische Dehnungsmessstreifen besteht dabei aus einem Trägermaterial, das als starre flache Platte ausgebildet ist, auf der ein Lichtwellenleiter mit drei Abschnitten mit jeweils einem Faser-Bragg-Gitter aufgeklebt und durch eine weitere flache aufgeklebte Platte abgedeckt ist. Bei einer anderen Ausführungsart ist der Lichtwellenleiter in einem harten Trägermaterial aus einem ausgehärteten Epoxydharz eingekapselt. Zur Dehnungsmessung wird der optische Dehnungsmessstreifen mit seiner plattenförmigen oder aus einer Epoxydharzschicht bestehenden Unterlage auf einen Verformungsoder Dehnungskörper geklebt, dessen Dehnung erfasst werden soll. Zur Aufklebung muss der optische Dehnungsmessstreifen mit seiner Unterlage fest auf den Verformungs- oder Dehnungskörper aufgedrückt werden, wodurch bereits starke Querkräfte in die starre Epoxydharzschicht oder die Platten eingeleitet werden. Durch die starre Verbindung mit dem Faser-Bragg-Gitter kann dann eine bleibende Restspannung in dem Faser-Bragg-Gitter verbleiben, die häufig zu einer starken Verbreiterung des Reflexionspeaks führt. Derartige optische Dehnungsmessstreifen mit ihren in Epoxydharz eingekapselten Faser-Bragg-Gittern oder den zwischen zwei harten Platten geklebten Faser-Bragg-Gittern können aber auch in kohlefaserverstärkten Verbundstoffen oder Zementmaterialien zur Dehnungsermittlung fest eingefügt werden, wodurch beim Aushärtevorgang teilweise auch bleibende Querkräfte in das Faser-Bragg-Gitter eingeleitet werden. Dies führt dann häufig zu Interferenzen in den Faser-Bragg-Gittern, die zu einer starken Verbreiterung der Reflexionspeaks mit einem Maximum oder mehreren Maxima führen, deren Reflexionswellenlängen dann mit hinreichender Genauigkeit nur schwer detektierbar sind.

Allerdings ist aus der DE 196 48 403 C1 ein optischer Aufnehmer zur Detektionsmessung mit einem integrierten Faser-Bragg-Gitter bekannt, in dessen Faser-Bragg-Gitter keine Querkräfte einleitbar sind, die zu einer Verbreiterung der Reflexionspeaks führen können. Bei diesem Aufnehmer handelt es sich um einen Kraftaufnehmer, mit dem sowohl Zug- als auch Druckkräfte erfassbar sind. Deshalb ist der Lichtwellenleiter mit seinen Faser-Bragg-Gittern zwischen zwei beabstandeten Einspannelementen angeordnet, die gegeneinander durch eine Druckfeder und einen Dehnungskörper in Zugrichtung vorgespannt sind. Dabei ist der Lichtwellenleiter mit seinem Faser-Bragg-Gitter-Abschnitt in dem rohrförmigen Dehnungskörper angeordnet und lediglich an den Einspannelementen kraftschlüssig befestigt. Im Bereich des Faser-Bragg-Gitters ist in dem Hohlraum zwischen dem Dehnungskörper und dem Wellenleiterabschnitt mit dem Faser-Bragg-Gitter offensichtlich ein weicher Füllstoff vorgesehen. Zur Kraftmessung wird die Kraft in die beiden Einspannelemente auf Zug oder Druck eingeleitet, wodurch der Wellenleiterabschnitt mit dem Faser-Bragg-Gitter sowohl gedehnt als auch gestaucht werden kann und somit seine Reflexionswellenlänge in beide Richtungen proportional zur Krafteinleitung verändert. Durch den geschützten Einbau des Faser-Bragg-Gitter-Abschnitts bleiben die Reflexionspeaks relativ schmal, so dass die Wellenlängenänderung genau detektierbar ist. Allerdings sind derartige rohrförmige Wandlerelemente mit den rechtwinklig dazu vorgesehenen Einspannelementen zur Krafteinleitung sehr voluminös und aufwendig in der Herstellung. Außerdem sind derartige Wandlerelemente auch nur schwer an den zu erfassenden dehnbaren Oberflächen zu befestigen. Im Übrigen geht durch die Vorspannung bereits ein Teil des Dehnungsmessbereichs in Zugrichtung verloren, so dass damit größere Dehnungswirkungen nicht mehr erfassbar sind.

Der Erfindung liegt deshalb die Aufgabe zu Grunde, einen optischen Dehnungsmessstreifen zu schaffen, der eine kompakte flache Bauweise aufweist und mit dem die zu erfassenden Dehnungen vorspannungsfrei genau detektierbar sind.

Diese Aufgabe wird durch die im Patentanspruch 1 und 9 angegebene Erfindung gelöst. Weiterbildungen und vorteilhafte Ausführungsbeispiele der Erfindung sind in den Unteransprüchen angegeben.

Die Erfindung hat den Vorteil, dass durch die beiden flachen Befestigungselemente außerhalb des Faser-Bragg-Gitter-Abschnitts in diesen die Dehnungskraft in Längsrichtung gleichmäßig eingeleitet wird. Dabei ist durch die kraftschlüssigen Befestigungselemente eine anderweitige Krafteinleitung in den Bragg-Gitter-Abschnitt ausgeschlossen, so dass die Reflexionswellenlänge eindeutige Reflexionspeaks erzeugt, die eine genaue Detektion der Reflexionswellenlänge und damit eine genaue Dehnungserfassung möglich machen.

Gleichzeitig hat die Erfindung den Vorteil, dass durch die relativ weiche elastische Umhüllung des Faser-Bragg-Gitter-Abschnitts dieser sowohl in Längsrichtung als auch in Querrichtung fixiert ist, aber verbleibende Materialspannungen oder Querkräfte vom dehnungsmessenden Faser-Bragg-Gitter-Abschnitt ferngehalten werden. Dadurch wird gleichzeitig der Lichtwellenleiter in seinem messenden Bereich vor mechanischen Beschädigungen und bleibenden Verformungen geschützt. Weiterhin hat die Umhüllung des Faser-Bragg-Gitter-Abschnitts mit dem verhältnismäßig weichen elastischen Kunststoff den Vorteil, dass durch die vorspannungsfreie Fixierung damit auch Stauchungen messbar sind, ohne dass der Lichtwellenleiter an einer harten Seitenführung befestigt sein muss.

Die Erfindung hat weiterhin den Vorteil, dass ein derartiger optischer Dehnungsmessstreifen mit vorspannungsfreiem fixiertem Faser-Bragg-Gitter-Abschnitt den gesamten Zugmessbereich für eine Dehnungsmessung ausnutzen kann, der denjenigen von herkömmlichen elektrischen Dehnungsmessstreifen erheblich übersteigt und der zusätzlich ohne Verlust von Zugmessbereich auch noch Stauchungen erfassen kann.

Ein weiterer Vorteil der Erfindung ist die einfache Herstellung des optischen Dehnungsmessstreifens durch die Verklebung des Lichtwellenleiters mit zwei verschiedenen Kunststoffmaterialien, die nicht nennenswert aufwendiger ist, als wenn der Lichtwellenleiter insgesamt mit einer kraftschlüssigen Befestigungsschicht verklebt oder umhüllt wäre.

Die Erfindung wird anhand eines Ausführungsbeispiels, das in der Zeichnung dargestellt ist, näher erläutert. Es zeigen:
- Fig. 1: eine Seitenansicht eines optischen Dehnungsmessstreifens als schematische Schnittzeichnung, und
- Fig. 2: eine Vorderansicht eines optischen Dehnungsmessstreifens als schematische Schnittzeichnung.

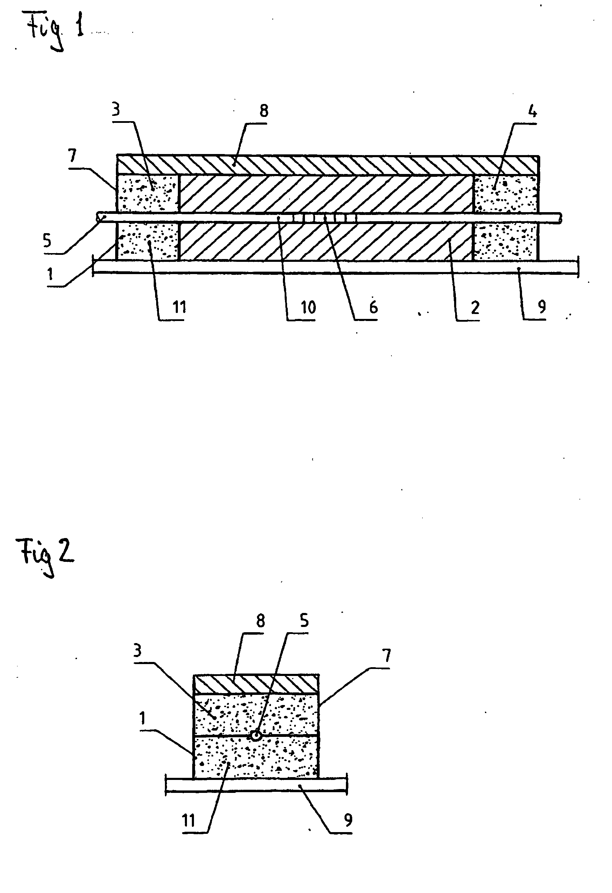

In Fig. 1 der Zeichnung ist ein optischer Dehnungsmessstreifen in Seitenansicht schematisch dargestellt, der im Wesentlichen aus einer Unterlage 1 und aus einer Auflage 7 besteht, zwischen denen ein Lichtwellenleiter 5 mit einem Faser-Bragg-Gitter 6 geklebt ist, wobei die Unterlage 1 und die Auflage 5 zwei flache seitlich neben den Faser-Bragg-Gitter-Abschnitt 10 angeordnete Befestigungselemente 3, 4 aus einem verhältnismäßig harten gut haftendem Kunststoff enthält und dazwischen ein verhältnismäßig weiches elastisches Fixierelement 2 vorgesehen ist.

Bei dem optischen Dehnungsmessstreifen handelt es sich um ein Wandlerelement, das vorzugsweise auf einem dehnungsempfindlichen Verformungskörper 9 appliziert wird, dessen Dehnung erfasst werden soll. Hierbei kann es sich um einen Verformungskörper 9 beispielsweise eines Kraftaufnehmers handeln, der vorzugsweise aus Aluminium besteht, oder z. B. um ein dehnungsempfindliches Teil eines Flugzeugkörpers, dessen Dehnung direkt erfasst werden soll. Deshalb ist hier ein Verformungskörper 9 aus Aluminium vorgesehen, auf den der optische Dehnungsmessstreifen appliziert ist. Es sind aber Verformungskörper 9 oder dehnungsempfindliche Bauteile aus anderen Werkstoffen denkbar, so ist es insbesondere vorgesehen, derartige optische Dehnungsmessstreifen auch in Faser-Verbundwerkstoffen zu integrieren oder auf diesen zu applizieren.

Bei dem vorgesehenen Verformungskörper 9 aus Aluminium wird der optische Dehnungsmessstreifen mittels eines nicht dargestellten Kunststoffklebstoffs direkt aufgeklebt, der auch bei elektrischen Dehnungsmessstreifen Verwendung findet. Der Lichtwellenleiter 5 ist linear ausgebildet und auf der Unterlage 1 angeordnet und durch einen speziellen Herstellungsprozess etwa zur Hälfte in diese Unterlage 1 eingelassen. Die Unterlage 1 besteht dabei aus ihren beiden seitlichen flachen unteren Befestigungsstreifen 11, die linksund rechtsseitig neben dem Bragg-Gitter-Abschnitt 10 vorgesehen sind. Dazwischen ist als Teil der Unterlage 1 eine untere Fixierschicht 2 angeordnet, die mindestens den Faser-Bragg-Gitter-Abschnitt 10 des Lichtwellenleiters 5 zur Unterlage 1 ausfüllt. Bei den Befestigungsstreifen 11 handelt es sich um Trägerfolien, wie sie auch bei elektrischen Dehnungsmessstreifen üblich sind, die hier vorzugsweise aus einem Stapel von z. B. vier phenolharzgetränkten einzelnen Glasfaserblättern bestehen, die Befestigungselemente 3, 4 für den Lichtwellenleiter 5 darstellen. Bei diesen Befestigungselementen 3, 4 handelt es sich um einen verhältnismäßig harten ausgehärteten Kunststoff, der entsteht, wenn die phenolharzgetränkten Glasfaserblätter unter Druck auf ca. 165° erhitzt und dadurch miteinander verklebt werden und bei einer nachfolgenden Abkühlung aushärten. Dabei sollte die Erhitzung unter Druck eine angemessene Zeit zur Vernetzung von vorzugsweise drei Stunden aufrechterhalten werden.

Die zwischen diesen Befestigungselementen 3, 4 vorgesehene flache Fixierschicht 2 der Unterlage 1 besteht hingegen aus einem relativ weichen elastischen Kunststoff, der ebenfalls seine Klebkraft durch eine Erhitzung unter Druckeinwirkung entfaltet. Vorzugsweise werden dazu folienartige Acrylatklebestreifen verwendet, die auch unter der Warenbezeichnung "Pyralux®" von der Firma Du Pont vertrieben werden. Durch diese Klebestreifen zwischen den beiden Befestigungselementen 3, 4 entsteht nach dem Aushärten eine formschlüssige Fixierung des Lichtwellenleiters 5 mit seinem Faser-Bragg-Gitter-Abschnitt 10 auf dem Verformungskörper 9, durch den keine Querkräfte und mechanische Spannungen in das Faser-Bragg-Gitter 6 einleitbar sind. Diese Unterlage 1 aus den beiden seitlichen Befestigungsstreifen 11 und der dazwischen angeordneten Fixierschicht 2 besitzt überall die gleiche Höhe von ca. 0,2 bis 0,25 mm und ist vorzugsweise ca. 30 bis 40 mm lang. Dabei wird der Lichtwellenleiter 5 auch zur Hälfte auf einer Höhe von ca. 90 µm von der Fixierschicht 2 umschlossen und ist mit dieser fest verklebt.

Die Anordnung des Lichtwellenleiters 5 zwischen der Unterlage 1 und der Auflage 7 ist im Einzelnen aus der Fig. 2 der Zeichnung ersichtlich. Dabei besitzt der optische Dehnungsmessstreifen etwa eine gesamte Breite von vorzugsweise ca. 5 - 10 mm, die ausreicht, um den ca. 180 µm dicken Lichtwellenleiter 5 gut zu umschließen, und gleichzeitig eine feste Applikation auf dem Verformungskörper 9 gewährleistet.

Oberhalb der Unterlage 1 und auf dem Lichtwellenleiter 5 ist zusätzlich noch eine flache Schicht einer Auflage 7 vorgesehen, die ebenfalls rechts- und linksseitig eine harte gut haftende Schicht aus Befestigungsstreifen aufweist und die mit den unteren Befestigungsstreifen 11 und dem Lichtwellenleiter 5 eine kraftschlüssige Verbindung bildet, und jeweils ein Befestigungselement 3, 4 darstellt. Dabei sind auch die beiden oberen Befestigungsstreifen 11 vorzugsweise aus phenolharzgetränkten Glasfaserstreifen aufgebaut, die den Lichtwellenleiter 5 ohne Faser-Bragg-Gitter-Abschnitt 10 zur Hälfte und kraftschlüssig umschließen. Durch die so aufgebauten Befestigungselemente 3, 4 werden ausschließlich die Dehnungskräfte in den Lichtwellenleiter 5 bzw. dessen Faser-Bragg-Gitter 6 in Faserlängsrichtung eingeleitet. Zur Befestigung mit den Lichtwellenleitern 5 werden die beiden phenolharzgetränkten Glasfaserstreifen 11 unter Druck kurzzeitig auf 165° erhitzt und zur Aushärtung langsam abgekühlt. Dadurch entsteht eine harte kraftschlüssige Verbindung mit dem Lichtwellenleiter 5, die nur ein sehr geringes Kriechverhalten aufweist.

Auch auf der Auflageschicht 7 ist zwischen den beiden seitlichen oberen Befestigungsstreifen 11 eine obere Fixierschicht 2 aus einem weichen elastischem Kunststoffkleber, vorzugsweise dem Acrylatklebstoff, angeordnet, der ebenfalls den Lichtwellenleiter 5 und insbesondere auch den Abschnitt 10 mit dem Faser-Bragg-Gitter 6 zur Hälfte abdeckt und damit mit der unteren Fixierschicht 2 vollständig umschließt. Dabei sind ebenfalls beide Fixierschichten 2 sowohl von der Auflage- 7 als auch von der Unterlageschicht 1 durch einen Erhitzungsvorgang unter Druckeinwirkung mit dem Lichtwellenleiter 5 verklebt. Da dieser mittlere Teil des optischen Dehnungsmessstreifens aus den beiden Fixierschichten als Fixierelement 2 relativ weich und elastisch ausgebildet ist, fixiert er lediglich den Lichtwellenleiterabschnitt 10 mit dem Faser-Bragg-Gitter 6 in seiner Längs- und Querrichtung, wobei er so weich und elastisch ist, dass damit keine Quer- oder Längskräfte dauerhaft in das Faser-Bragg-Gitter 6 einleitbar sind. Dadurch wird insbesondere eine bleibende Einleitung von Querkräften bei der Montage oder während des Dehnungsvorgangs verhindert, durch die die Breite der Maxima der Reflexionspeaks veränderbar wäre.

Ähnlich wie bei der Unterlage 1 ist auch die flache Schicht der Auflage 7 in einer Höhe von vorzugsweise 0,2 - 0,25 mm vorgesehen, durch die der ca. 180 µm Ø dicke Lichtwellenleiter 5 auch im mittleren Bereich formschlüssig eingebettet ist. Da die Befestigungsstreifen 11 und Fixierschichten 2 in Längsrichtung nur stumpf aneinander stoßen, ist auf die Auflageschicht 7 insgesamt noch eine Deckschicht 8 aufgebracht, die vorzugsweise auch aus einer weichen elastischen Klebeschicht aus einem Acrylatkunststoff besteht.

Zur Herstellung des optischen Dehnungsmessstreifens werden die einzelnen blattartigen Streifen 11 der Befestigungselemente 3, 4 und der Fixierelemente 2 zunächst auf der Unterlage 1 in Längsrichtung nebeneinander und in der Höhe übereinander auf eine erhitzbare Druckplatte gelegt. Dann wird darauf der lineare Lichtwellenleiter 5 symmetrisch angeordnet und in gleicher Weise darauf die blattartigen Streifen und Schichten der Auflage 7 positioniert. Zur Längsverbindung wird dann noch die gemeinsame Deckschicht 8 über die gesamte Fläche des Dehnungsmessstreifens gelegt. Dieses gesamte Schichtgebilde wird dann zwischen zwei erhitzbaren Druckplatten angeordnet und auf eine Temperatur von ca. 165° erhitzt, und unter einem bestimmten Druck lässt man das Ganze langsam abkühlen. Dadurch entsteht die feste kraftschlüssige Verbindung an den Endbereichen des Lichtwellenleiters 6 und die weiche elastische Verbindung im mittleren Bereich und dem Faser-Bragg-Gitter-Abschnitt 10. Dabei wird bereits durch das relativ weiche elastische Fixierelement 2 verhindert, dass bereits bei der Herstellung starke Querkräfte in den Bragg-Gitter-Bereich 10 eingeleitet werden, die zu einer bleibenden Veränderung der Faser-Bragg-Gitter-Struktur führen könnten. Da durch eine derartige Anordnung der Faser-Bragg-Gitter 6 innerhalb der Fixierelemente 2 die Dehnungskräfte nur durch die Befestigungselemente 3, 4 längsseits in die Faser-Bragg-Gitter 6 eingeleitet werden, entsteht wie bei einer Vorspannung der Faser-Bragg-Gitter 6 ein eindeutiger schmaler Reflexionspeak mit einem klaren Maximum, dessen Wellenlänge genau detektierbar ist. Denn erst durch eine genaue Detektierbarkeit bei der Änderung der Faser-Bragg-Gitter-Wellenlänge ist ein genaues Messsignal zum Dehnungsverhalten des Verformungskörpers erhältlich.

Der erfindungsgemäße optische Dehnungsmessstreifen muss allerdings nicht schichtweise aufgebaut sein, sondern die Unterlagebereiche und Auflagebereiche können auch als einheitliche Kunststoffschicht hergestellt werden, von der der Lichtwellenleiter 5 umgossen ist. Dabei müssen lediglich die Befestigungselemente 3, 4 aus einem gut haftenden relativ harten Material bestehen, das kraftschlüssig mit den beiden Lichtwellenleiterenden verbunden ist, die an den Faser-Bragg-Gitter-Abschnitt 10 anschließen. Dazwischen ist dann im mittleren Teil ein Fixierelement 2 anzuordnen, das auch einstückig gegossen werden kann und nur eine Fixierung des Faser-Bragg-Gitter-Abschnitts 10 bewirken muss. Dazu wird vorzugsweise auch ein elastisches weiches Kunststoffmaterial vorgesehen.

## Patentansprüche

1. Optischer Dehnungsmessstreifen, umfassend mindestens einen Lichtwellenleiter, eine Unterlage, Befestigungselemente und ein Fixierelement, wobei der mindestens eine Lichtwellenleiter (5) auf einer dünnen Unterlage (1) befestigt ist und mindestens einen Abschnitt (10) mit einem Faser-Bragg-Gitter (6) zur Erfassung einer Dehnung aufweist, wobei der Lichtwellenleiter (5) außerhalb des Faser-Bragg-Gitter-Abschnitts (10) beidseitig zu diesem durch zwei Befestigungselemente (3, 4) abgedeckt ist, durch die der Lichtwellenleiter (5) kraftschlüssig auf seiner Unterlage (1) befestigt ist, und wobei der Lichtwellenleiter (5) zwischen den seitlichen Befestigungselementen (3, 4) von einem relativ weichen elastischen Fixierelement (2) umgeben ist, das mindestens den Faser-Bragg-Gitter-Abschnitt (10) auf seiner Unterlage (1) formschlüssig fixiert, **dadurch gekennzeichnet, dass** die Befestigungselemente (3, 4) als Befestigungsstreifen (11) ausgebildet sind, die aus einem Stapel phenolharzgetränkter Glasfaserblätter bestehen.

2. Optischer Dehnungsmessstreifen nach Anspruch 1, **dadurch gekennzeichnet, dass** dieser als ein rechteckiger folienartiger Körper ausgebildet ist, der eine flache dünne Schicht als Unterlage (1) und eine flache dünnen Schicht als Auflage (7) aufweist, zwischen denen der Lichtwellenleiter (5) in Längsrichtung linear angeordnet ist.

3. Optischer Dehnungsmessstreifen nach Anspruch 1 oder 2, **dadurch gekennzeichnet, dass** die Unterlage (1) im Bereich der Faser-Bragg-Gitter (6) aus einer flachen dünnen Fixierschicht (2) besteht, an die beidseitig zur Längsrichtung jeweils ein unterer flacher dünner Befestigungsstreifen (11) angeordnet ist, auf der der Lichtwellenleiter (5) mit seinem Faser-Bragg-Gitter (6) durch eine Klebeverbindung fixiert ist.

4. Optischer Dehnungsmessstreifen nach Anspruch 3, **dadurch gekennzeichnet, dass** auf der Unterlage (1) mit dem darauf befestigten Lichtwellenleiter (5) eine flache dünne Schicht als Auflage (7) aufgeklebt ist, wobei der Lichtwellenleiter (5) mit dem Faser-Bragg-Gitter (6) zwischen der Unterlage (1) und der Auflage (7) durch eine Klebeverbindung mindestens formschlüssig befestigt ist.

5. Optischer Dehnungsmessstreifen nach einem der Ansprüche 1 bis 4, **dadurch gekennzeichnet, dass** das Fixierelement (2) mindestens zwei dünne Fixierschichten enthält, zwischen denen der Lichtwellenleiter (5) mindestens mit seinem Faser-Bragg-Gitter-Abschnitt (10) formschlüssig befestigt ist.

6. Optischer Dehnungsmessstreifen nach Anspruch 5, **dadurch gekennzeichnet, dass** das Fixierelement (2) aus einem relativ weichen elastischen gut haftenden Kunststoffmaterial besteht.

7. Optischer Dehnungsmessstreifen nach Anspruch 6, **dadurch gekennzeichnet, dass** das relativ weiche elastische Kunststoffmaterial aus einer oder mehreren folienartigen acrylathaltigen Klebeschichten besteht.

8. Optischer Dehnungsmessstreifen nach Anspruch 2 oder 4, **dadurch gekennzeichnet, dass** auf der Auflage (7) eine flache folienartige Deckschicht (8) befestigt ist, die aus mindestens einer gut haftenden acrylathaltigen Klebeschicht besteht.

9. Verfahren zur Herstellung eines optischen Dehnungsmessstreifens nach einem der Ansprüche 1 bis 8, bei dem zwischen einer Unterlage (1) und einer Auflage (7) ein Lichtwellenleiter (5) mit einem Faser-Bragg-Gitter-Abschnitt (10) geklebt wird, **dadurch gekennzeichnet, dass** zwischen zwei erhitzbaren Druckplatten zunächst eine flache Fixierschicht (2) mit in Längsrichtung zwei anliegenden Befestigungsstreifen (11), die aus einem Stapel phenolharzgetränkter Glasfaserblätter bestehen, gelegt wird, auf der ein Lichtwellenleiter (5) längs aufgelegt wird, wobei die Unterlageschicht (1) mit einer gleichartigen Auflageschicht aus einem Stapel phenolharzgetränkter Glasfaserblatter abgedeckt wird, die dann insgesamt unter einem vorgegebenen Druck erhitzt und ausgehärtet werden.

10. Verfahren nach Anspruch 9, **dadurch gekennzeichnet, dass** über die Auflageschicht (7) noch eine Deckschicht (8) aus einem folienartigen Acrylatklebstoff gelegt und mit der Unterlage (1) und der Auflage (7) unter einem vorgegebenen Druck erhitzt und ausgehärtet wird.

## Claims

1. Optical strain gauge comprising at least one optical waveguide, one bottom support, fastening elements and a fixing element, wherein the at least one optical waveguide (5) is fastened on a thin bottom support (1) and comprises at least one section (10) with a fibre Bragg grating (6) for detecting a strain, wherein the optical waveguide (5) outside of the fibre Bragg grating section (10) and on both sides thereof is covered by two fastening elements (3, 4), by which the optical waveguide (5) is fastened in a force-locking manner on its bottom support (1), and wherein the optical waveguide (5) between the two lateral fastening elements (3, 4) is surrounded by a relatively soft elastic fixing element (2), which fixes at least the fibre Bragg grating section (10) in a form-locking manner on its bottom support (1), **characterized in that** the fastening elements (3, 4) are formed as fastening strips (11) consisting of a stack of phenolic resin saturated glass fibre leaves.

2. Optical strain gauge according to claim 1, **characterized in that** it is formed as a rectangular film-type body comprising a flat thin layer as bottom support (1) and a flat thin layer as top support (7), between which the optical waveguide (5) is linearly arranged in the longitudinal direction.

3. Optical strain gauge according to claim 1 or 2, **characterized in that** the bottom support (1) in the region of the fibre Bragg grating (6) consists of a flat thin fixing layer (2), at both longitudinal ends thereof respectively one bottom flat thin fastening strip (11) is arranged, on which the optical waveguide (5) with its fibre Bragg grating (6) is fixed by an adhesive connection.

4. Optical strain gauge according to claim 3, **characterized in that** a flat thin layer as top support (7) is glued on the bottom support (1) with the optical waveguide (5) fastened thereon, wherein the optical waveguide (5) with the fibre Bragg grating (6) between the bottom support (1) and the top support (7) is fastened at least in a form-locking manner by an adhesive connection.

5. Optical stain gauge according to any of the claims 1 to 4, **characterized in that** the fixing element (2) contains at least two thin fixing layers, between which the optical waveguide (5) at least with its fibre Bragg grating section (10) is fastened in a form-locking manner.

6. Optical strain gauge according to claim 5, **characterized in that** the fixing element (2) consists of a relatively soft elastic well-adhering plastic material.

7. Optical strain gauge according to claim 6, **characterized in that** the relatively soft elastic plastic material consists of one or more film-type acrylate-containing adhesive layers.

8. Optical strain gauge according to claim 2 or 4, **characterized in that** a flat film-type covering layer (8) consisting of at least one well-adhering acrylate-containing adhesive layer is fastened on the top support (7).

9. Method for the production of an optical strain gauge according to any of the claims 1 to 8, with which an optical waveguide (5) with a fibre Bragg grating section (10) is glued between a bottom support (1) and a top support (7), **characterized in that** first a flat fixing layer (2) with two fastening strips (11) adjoining in the longitudinal direction and consisting of a stack of phenolic resin saturated glass fibre leaves is laid between two heatable pressure plates, onto which fixing layer an optical waveguide (5) is longitudinally laid, wherein the bottom support layer (1) is covered with a similar-type top support layer of a stack of phenolic resin saturated glass fibre leaves, which are then all together heated under a prescribed pressure and cured.

10. Method according to claim 9, **characterized in that** a covering layer (8) of a film-type acrylate adhesive is laid over the top support layer (7), and is heated under a prescribed pressure and cured with the bottom support (1) and the top support (7).

## Revendications

1. Jauge optique extensométrique comprenant au moins un guide d'onde de lumière, un support de base, des éléments de fixation et un élément de fixage, dans laquelle le au moins un guide d'onde de lumière (5) est fixé sur un mince support de base (1) et comprend au moins une section (10) de réseau de Bragg sur fibre (6) pour la détection d'un allongement, dans laquelle le guide d'onde de lumière (5) à l'extérieur de la section (10) de réseau de Bragg sur fibre est recouvert sur ses deux côtés par deux éléments de fixation (3, 4), par l'intermédiaire desquels le guide d'onde de lumière (5) est fixé par liaison de force à son support de base (1), et dans laquelle le guide d'onde de lumière (5) entre les deux éléments de fixation (3, 4) latéraux est entouré par un élément de fixage (2) élastique relativement souple qui fixe par complémentarité de forme au moins la section (10) de réseau de Bragg sur fibre à son support de base (1), **caractérisée en ce que** les éléments de fixation (3, 4) sont réalisés sous forme de bandes de fixation (11), lesquelles se composent d'un empilement de feuilles en fibre de verre imprégnées de résine phénolique.

2. Jauge optique extensométrique selon la revendication 1, **caractérisée en ce que** celle-ci est réalisée sous forme d'un corps rectangulaire en forme de film qui comprend une couche mince et plate en tant que support de base (1) et une couche mince et plate en tant que support supérieur (7), entre lesquelles le guide d'onde de lumière (5) est disposé linéairement dans la direction longitudinale.

3. Jauge optique extensométrique selon la revendication 1 ou 2, **caractérisée en ce que** le support de base (1) dans la région du réseau de Bragg sur fibre (6) comprend une couche de fixage (2) mince et plate, aux deux extrémités longitudinales desquelles est respectivement disposée une bande de fixation (11) inférieure mince et plate, sur laquelle le guide d'onde de lumière (5) avec son réseau de Bragg sur fibre (6) est fixé par une liaison adhésive.

4. Jauge optique extensométrique selon la revendication 3, **caractérisée en ce qu'**une couche mince et plate en tant que support supérieur (7) est collée sur le support de base (1) avec le guide d'onde de lumière (5) fixé dessus, dans laquelle le guide d'onde de lumière (5) avec le réseau de Bragg sur fibre (6) est fixé au moins par complémentarité de forme entre le support de base (1) et le support supérieur (7) à travers une liaison adhésive.

5. Jauge optique extensométrique selon l'une quelconque des revendications 1 à 4, **caractérisée en ce que** l'élément de fixage (2) contient au moins deux minces couches de fixage, entre lesquelles le guide d'onde de lumière (5) au moins avec sa section (10) de réseau de Bragg sur fibre est fixé par complémentarité de forme.

6. Jauge optique extensométrique selon la revendication 5, **caractérisée en ce que** l'élément de fixage (2) comprend un matériau plastique élastique relativement souple et de bonne adhérence.

7. Jauge optique extensométrique selon la revendication 6, **caractérisée en ce que** le matériau plastique élastique relativement souple se compose d'une ou plusieurs couches adhésives sous forme de film et contenant un acrylate.

8. Jauge optique extensométrique selon la revendication 2 ou 4, **caractérisée en ce qu'**une couche de revêtement (8) plate et sous forme de film est fixée sur le support supérieur (7) et se compose d'au moins une couche adhésive de bonne adhérence contenant un acrylate.

9. Procédé de fabrication d'une jauge optique extensométrique selon l'une quelconque des revendications 1 à 8, dans lequel un guide d'onde de lumière (5) avec une section (10) de réseau de Bragg sur fibre est collé entre un support de base (1) et un support supérieur (7), **caractérisé en ce que** d'abord, une couche de fixage (2) plate, ayant deux bandes de fixation (11) qui sont adjacentes selon la direction longitudinale et se composent d'un empilement de feuilles en fibre de verre imprégnées de résine phénolique, est déposée entre deux plaques d'impression pouvant être chauffées, sur laquelle couche de fixage est disposé un guide d'onde de lumière (5) dans le sens de la longueur, dans lequel la couche de support de base (1) est recouverte d'une couche de support supérieur du même type formée d'un empilement de feuilles en fibre de verre imprégnées de résine phénolique, lesquelles couches sont ensuite toutes chauffées et durcies sous une pression prédéterminée.

10. Procédé selon la revendication 9, **caractérisé en ce qu'**une couche de revêtement (8) d'un adhésif acrylique sous forme de film est encore déposée sur la couche de support supérieur (7) et est chauffée et durcie sous une pression prédéterminée avec le support de base (1) et le support supérieur (7).
